(19) Europäisches Patentamt
European Patent Office
Office européen des brevets

(11) **EP 3 919 874 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21177450.0**

(22) Anmeldetag: **02.06.2021**

(51) Internationale Patentklassifikation (IPC):
*G01F 1/34* (2006.01)    *G01F 1/74* (2006.01)
*G01F 1/84* (2006.01)    *G01F 25/00* (2022.01)

(52) Gemeinsame Patentklassifikation (CPC):
**G01F 1/74; G01F 1/8431; G01F 1/8436; G01F 25/00**

(54) **VERFAHREN ZUR ERMITTLUNG VON DURCHFLUSSMESSWERTEN EINES CORIOLIS-MASSEDURCHFLUSSMESSGERÄTS BEIM VORLIEGEN EINER ZWEIPHASENSTRÖMUNG**

METHOD FOR DETERMINING THE FLOW RATES OF A CORIOLIS FLOW METER IN THE PRESENCE OF A TWO-PHASE FLOW

PROCÉDÉ DE DÉTERMINATION DES VALEURS MESURÉES DE DÉBIT D'UN DÉBITMÈTRE MASSIQUE À EFFET CORIOLIS EN PRÉSENCE D'UN ÉCOULEMENT À DEUX PHASES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2020 DE 102020114713**

(43) Veröffentlichungstag der Anmeldung:
**08.12.2021 Patentblatt 2021/49**

(73) Patentinhaber: **Krohne AG**
**4019 Basel (CH)**

(72) Erfinder:
• **Wang, Tao**
**Rough Common, Canterburry, CT2 9DG (GB)**
• **Wang, Xue**
**Rough Common, Canterburry, CT2 9DG (GB)**
• **Yan, Yong**
**Sevenoaks, Kent, TN13 2AR (GB)**
• **Liu, Jinyu**
**Wellingborough, Northamptonshire, NN8 1TL (GB)**

(74) Vertreter: **Gesthuysen Patentanwälte Partnerschaftsgesellschaft mbB**
**Huyssenallee 68**
**45128 Essen (DE)**

(56) Entgegenhaltungen:
WO-A1-2019/199268    US-B2- 10 473 512
US-B2- 7 188 534    US-B2- 8 831 896

• YAN YONG ET AL: "Application of soft computing techniques to multiphase flow measurement: A review", FLOW MEASUREMENT AND INSTRUMENTATION, BUTTERWORTH-HEINEMANN, OXFORD, GB, vol. 60, 13 February 2018 (2018-02-13), pages 30 - 43, XP085369138, ISSN: 0955-5986, DOI: 10.1016/J.FLOWMEASINST.2018.02.017

EP 3 919 874 B1

**Beschreibung**

Die Erfindung betrifft ein Verfahren zur Ermittlung von Durchflussmesswerten eines Coriolis-Massedurchflussmessgeräts beim Vorliegen einer Zweiphasenströmung eines Zweiphasenmediums mit Gasphase in einem Zweiphasenmessintervall und einem daran anschließenden Vorliegen einer Einphasenströmung eines Einphasenmediums ohne Gasphase in einem Einphasenmessintervall. Darüber hinaus betrifft die Erfindung auch ein Coriolis-Massedurchflussmessgerät mit mindestens einem von einem Medium durchströmbarem Messrohr, mindestens einem Schwingungserzeuger, mindestens zwei Schwingungsaufnehmern und mindestens einer Ansteuerungs- und Auswerteeinheit, wobei das Coriolis-Massedurchflussmessgerät dazu ausgebildet ist, das zuvor genannte Verfahren auszuführen.

Coriolis-Massedurchflussmessgeräte und Verfahren zur Ermittlung von Durchflussmesswerten eines Coriolis-Massedurchflussmessgeräts sind seit vielen Jahrzehnten in ganz unterschiedlicher Ausgestaltung bekannt. Mit Coriolis-Massedurchflussmessgeräten lassen sich hohe Messgenauigkeiten erzielen, die im Falle des Vorliegens einer Einphasenströmung teilweise besser sind als 0,1 % vom Messwert, sodass Coriolis-Massedurchflussmessgeräte beispielsweise auch im eichpflichtigen Verkehr eingesetzt werden können. Beim Vorliegen einer Zweiphasenströmung kann die Messgenauigkeit massiv negativ beeinflusst werden und dann beispielsweise nur noch einige Prozent oder auch nur noch einige zehn Prozent vom Messwert betragen. Im Regelfall ist die Beeinträchtigung um so stärker, je höher der Gas-Volumenanteil des Zweiphasenmediums ist.

Wenn hier von einer Zweiphasenströmung die Rede ist, dann ist damit allgemein eine Mehrphasenströmung gemeint, die einen gasförmigen Anteil aufweist. Dem Begriff der Zweiphasenströmung liegt also das Verständnis zugrunde, dass diese Strömung eine gasförmige Phase und eine nicht-gasförmige Phase aufweist, die ihrerseits flüssige Bestandteile aufweist, aber auch feste Bestandteile aufweisen kann. So wird der Begriff "Zweiphasenströmung" auch hier verwendet. Entsprechend liegt dem Begriff Einphasenströmung das Verständnis zugrunde, dass das Einphasenmedium jedenfalls keine Gasphase aufweist, aber flüssige Bestandteile und auch feste Bestandteile enthalten sein können.

Das Auftreten einer Zweiphasenströmung ist - wie bereits ausgeführt - deshalb problematisch, weil Gaseinschlüsse die Messgenauigkeit stark beeinflussen können und auch den sicheren Betrieb eines Coriolis-Massedurchflussmessgeräts erschweren oder sogar unmöglich machen. Vorliegend geht es um den Aspekt der Messgenauigkeit, der Aspekt der Aufrechterhaltung des zuverlässigen Betriebes eines Coriolis-Massedurchflussmessgeräts wird in einer Vielzahl von Anmeldungen der Patentanmelderin beschrieben; eine Übersicht mit diversen Querverweisen gibt beispielsweise die DE 10 2018 123 534 A1.

Die Problematik stark reduzierter Messgenauigkeit bei einer Zweiphasenströmung im Vergleich zum Vorliegen einer Einphasenströmung ist darin begründet, dass das Messprinzip bei Coriolis-Massedurchflussmessgeräten auf mechanischer Interaktion mit dem strömenden Medium beruht. Coriolis-Massedurchflussmessgeräte gehören zur Klasse der Vibrations-Messgeräte. Konkret wird wenigstens ein von dem zu vermessenden Medium durchströmtes Messrohr von einem Schwingungserzeuger zu einer Schwingung angeregt. Der Schwingungserzeuger wird von der Ansteuerungs- und Auswerteeinheit angesteuert, die oft durch ein eingebettetes Rechnersystem auf Microcontrollerbasis, insbesondere auf Basis eines digitalen Signalprozessors, realisiert ist. Das massebehaftete Medium wirkt aufgrund der durch zwei orthogonale Bewegungen - die der Strömung und die des Messrohres - hervorgerufene Coriolis-Trägheitskraft auf die Wandung des Messrohrs zurück. Diese Rückwirkung des Mediums auf das Messrohr führt zu einer Änderung der Messrohrgeschwindigkeit im Vergleich zum undurchströmten Schwingungszustand des Messrohres. Durch die Erfassung dieser Besonderheiten der Schwingungen des durchströmten Coriolis-Messrohrs (Phasenverschiebung zwischen ein- und auslaufseitiger Messrohrschwingung) durch die Ansteuerungs- und Auswerteeinheit kann der Massedurchfluss durch das Messrohr mit hoher Genauigkeit bestimmt werden.

Unabhängig davon, ob Medien beabsichtigt (z. B. in der Lebensmittelindustrie bei schaumig aufgeschlagenen Medien) oder unbeabsichtigt (anwendungsbedingt häufig nicht vermeidbar, wie bei Abfüllprozessen, z. B. bei der Betankung von Schiffen, auch als "Bunkerung" bezeichnet) Gaseinschlüsse aufweisen, leidet die Messgenauigkeit bei einer Zweiphasenströmung unter dem Umstand, dass nicht mehr die gesamte Masse des strömenden Mediums durch das vibrierende Messrohr in vollem Umfang ausgelenkt wird, sondern teilweise nur noch einen Teil der Auslenkung erfährt. Dies kann zum Beispiel daran liegen, dass weniger dichte Anteile im Medium dichtere Anteile umströmen, was auch für Bewegungskomponenten orthogonal zur Strömungsrichtung gilt, die für die Coriolis-Messung essenziell sind. Von Bedeutung kann auch die Kompression bzw. Dekompression gasförmiger Anteile im Medium sein, die durch die Massenträgheit schwererer flüssiger oder fester Mediumanteile bewirkt werden.

Im Stand der Technik sind verschiedene Versuche unternommen worden, die Messgenauigkeit von Coriolis-Massedurchflussmessgerät bei Zweiphasenströmungen zu verbessern. Dabei sind auch Methoden des sogenannten Soft-Computing zum Einsatz gekommen, also approximative Lösungsverfahren unter Verwendung von beispielsweise künstlichen neuronalen Netzwerken und Support Vector Machines (siehe z. B. Wang, L. et al.: "Gas-Liquid Two-Phase Flow Measurement Using Coriolis Flowmeters Incorporating Artificial Neural Network, Support Vektor Machine, and Genetic Programming Algorithms"; IEEE Transactions On Instrumentation And Measurement; Vol. 66; No. 5; Mai 2017). Auch wenn verschiedene Verbesserungen erzielt werden konnten, bleibt die Behandlung von Zweiphasenströmungen problematisch. Das gilt insbesondere für solche Messvorgänge, die mit einer Zweiphasenströmung beginnen und dann in eine Einphasenströmung übergehen.

Die Dokumente US 8 831 896 B2 und US 10 473 512 B2 zeigen ein Verfahren zur Ermittlung von Durchflussmesswerten eines Coriolis-Massedurchflussmessgeräts.

Vor dem aufgezeigten Hintergrund besteht daher die Aufgabe darin, ein Verfahren bereitzustellen, mit dem bei Coriolis-Massedurchflussmessgeräten beim Auftreten von Einphasen- und auch Zweiphasenströmungen eine erhöhte Messgenauigkeit erzielt wird. Entsprechendes gilt für die Ausgestaltung des eingangs genannten Coriolis-Massedurchflussmessgeräts.

Die zuvor hergeleitete Aufgabe wird bei dem Verfahren gemäss Anspruch 1 zur Ermittlung von Durchflussmesswerten eines Coriolis-Massedurchflussmessgeräts beim Vorliegen einer Zweiphasenströmung eines Zweiphasenmediums mit Gasphase in einem Zweiphasenmessintervall und einem daran anschließenden Vorliegen einer Einphasenströmung eines Einphasenmediums ohne Gasphase in einem Einphasenmessintervall dadurch gelöst, dass der Startzeitpunkt des Zweiphasenmessintervalls beim Einsetzen der Zweiphasenströmung bestimmt wird und dass der Endzeitpunkt des Zweiphasenmessintervalls zum Ende des Vorliegens der Zweiphasenströmung bestimmt wird. Damit ist zunächst sichergestellt, dass Klarheit darüber herrscht, in welchem Zeitraum überhaupt eine Zweiphasenströmung vorliegt oder vorgelegen hat.

Im Zweiphasenmessintervall werden Zweiphasen-Durchflussmesswerte der Zweiphasenströmung ermittelt und zumindest teilweise gespeichert. Damit stehen die Zweiphasen-Durchflussmesswerte auch einer späteren Untersuchung und Bearbeitung grundsätzlich zur Verfügung.

Im Einphasenmessintervall, das ja an das Zweiphasenmessintervall anschließt, wird wenigstens eine Zustandsgröße des Einphasenmediums ermittelt. Aus den gespeicherten Zweiphasen-Durchflussmesswerten und aus der wenigstens einen im Einphasenmessintervall ermittelten Zustandsgröße des Einphasenmediums werden als zumindest mittelbare Eingangsgrößen einer Korrekturrechnung nachträglich korrigierte Zweiphasen-Durchflussmesswerte ermittelt.

Der Erfindung liegt also die Idee zugrunde, die fehlerbehafteten Zweiphasen-Durchflussmesswerte einer nachträglichen Korrekturrechnung zu unterziehen, wobei für diese Korrekturrechnung mindestens eine Zustandsgröße des Einphasenmediums herangezogen wird, die im erst nach dem Zweiphasenmessintervall auftretenden Einphasenmessintervall bestimmt worden ist, und die dort aufgrund des Vorliegens einer messtechnisch gut beherrschbaren Einphasenströmung sehr genau bestimmt werden kann. Wenn es heißt, dass die gespeicherten Zweiphasen-Durchflussmesswerte und die ermittelte Zustandsgröße des Einphasenmediums (oder auch die mehreren ermittelten Zustandsgrößen des Einphasenmediums) als zumindest mittelbare Eingangsgrößen einer Korrekturrechnung verwendet werden, dann ist damit gemeint, dass beispielsweise die ermittelte Zustandsgröße nicht unmittelbar in die Korrekturrechnung eingehen muss, sondern die Zustandsgröße erst noch in einen anderen Wert umgerechnet und dann der Korrekturrechnung zugeführt wird. Dies wird anhand eines später beschriebenen Ausführungsbeispiels erläutert werden.

Die Idee besteht im Kern jedenfalls darin, dass das Ende der messtechnisch problematischen Zweiphasenströmung abgewartet wird und die sich dann einstellende Einphasenströmung dazu genutzt wird, um für eine Korrektur der fehlerbehafteten Zweiphasen-Durchflussmesswerte taugliche Zustandsgrößen des Einphasenmediums exakt zu bestimmen (jedenfalls viel exakter, als dies im Zweiphasenmessintervall möglich wäre). Die für die Korrekturrechnung verwendete Zustandsgröße des Einphasenmediums muss sich natürlich in irgendeiner Form auf die Zweiphasen Strömung auswirken, damit die Möglichkeit einer Korrektur gegeben ist.

Die so erhaltenen korrigierten Zweiphasen-Durchflussmesswerte können dann als Einzelwerte ausgegeben werden oder als Teil eines kumulierten Durchflussmesswertes ausgegeben werden.

Es versteht sich von selbst, dass im Einphasenmessintervall nicht nur die für die Korrekturrechnung erforderliche Zustandsgröße des Einphasenmediums bestimmt wird, sondern üblicherweise auch Durchflussmesswerte weiterhin bestimmt werden.

Gemäß einer vorteilhaften Ausgestaltung des Verfahrens ist vorgesehen, dass als Zustandsgröße des Einphasenmediums zumindest die Dichte $\rho_{SP}$ des Einphasenmediums ermittelt und als zumindest mittelbare Eingangsgröße der Korrekturrechnung verwendet wird. Untersuchungen unter Verwendung verschiedener Zustandsgrößen des Einphasenmediums haben ergeben, dass die Dichte $\rho_{SP}$ des Einphasenmediums in besonderer Weise geeignet ist, um innerhalb der Korrekturrechnung derart Einfluss zu nehmen, dass ein Messfehler im Zweiphasenmessintervall, der durchaus im Bereich von einigen 10 % vom Messwert liegen kann, in den einstelligen Prozentbereich gedrückt werden kann. Für einen typischen Betankungsvorgang (Zweiphasenmessintervall und Einphasenmessintervall zusammen genommen) von einem Schiff bedeutet das beispielsweise, dass Messfehler im Bereich von nur noch 0,5 % vom Messwert liegen, was eine erhebliche Verbesserung gegenüber dem Stand der Technik darstellt.

Ein bevorzugtes Ausführungsbeispiel des Verfahrens sieht vor, dass mit der Dichte $\rho_{SP}$ des Einphasenmediums der (scheinbare) Gas-Volumen-Anteil GVF des Zweiphasenmediums berechnet wird und der berechnete Gas-Volumen-Anteil GVF des Zweiphasenmediums als direkte Eingangsgröße der Korrekturrechnung verwendet wird. Dies ist also ein Beispiel dafür, dass die Zustandsgröße des Einphasenmediums, hier also die Dichte des Einphasenmediums $\rho_{SP}$, mittelbar als Eingangsgröße der Korrekturrechnung verwendet wird. Insbesondere wird der (scheinbare) Gas-Volumen-Anteil GVF des Zweiphasenmediums durch Bildung des Quotienten aus der Differenz aus der Dichte $\rho_{SP}$ des Einphasenmediums und der Dichte $\rho_{TP}$ des Zweiphasenmediums und der Dichte $\rho_{SP}$ des Einphasenmediums berechnet. Da die Dichte des Zweiphasenmediums nur mit einer gewissen Ungenauigkeit bestimmt werden kann, die durch das Zweiphasenmedium bedingt ist, könnte auch hier von einer scheinbaren Dichte $\rho_{TP}$ des Zweiphasenmediums gesprochen werden, unter deren Verwendung auch nur der scheinbare Gas-Volumen-Anteil GVF des Zweiphasenmediums bestimmt wird; es wird nachfolgend gleichwohl immer von dem Gas-Volumen-Anteil GVF des Zweiphasenmediums die Rede sein. Besonders bevorzugt wird der Gas-Volumen-Anteil GVF des Zweiphasenmediums durch Bildung des Quotienten aus der Differenz aus der Dichte $\rho_{SP}$ des Einphasenmediums und der Dichte $\rho_{TP}$ des Zweiphasenmediums und der Differenz aus der Dichte $\rho_{SP}$ des Einphasenmediums und der Dichte $\rho_{G}$ der Gasphase des Zweiphasenmediums berechnet.

$$GVF = (\rho_{SP} - \rho_{TP}) / (\rho_{SP} - \rho_{G})$$

Eine Weiterbildung dieses Verfahrens ist dadurch gekennzeichnet, dass die Dichte $\rho_{G}$ der Gasphase des Zweiphasenmediums bestimmt wird, indem die Temperatur des Zweiphasenmediums gemessen wird und der Druck am Ausgang des Coriolis-Massedurchflussmessgeräts gemessen wird. Die Dichte $\rho_{G}$ der Gasphase des Zweiphasenmediums wird dann basierend auf der gemessenen Temperatur des Zweiphasenmediums und basierend auf dem gemessenen Druck an der Ausströmseite des Coriolis-Massedurchflussmessgeräts bestimmt. Dies hat den Vorteil, dass die Dichte $\rho_{G}$ der Gasphase des Zweiphasenmediums nicht gänzlich als Parameter vorgegeben werden muss, sondern anhand der konkreten Betriebsbedingungen des Coriolis-Massedurchflussmessgeräts ermittelt wird. Dass sowohl der Druck wie auch die Temperatur essenziell für die Bestimmung der Dichte eines Gases sind, ergibt sich aus der thermischen Zustandsgleichung idealer Gase, die näherungsweise auch auf reale Gase angewendet werden kann. Hilfreich kann es zusätzlich sein, wenn Informationen über die stoffliche Zusammensetzung der Gasphase vorhanden sind, was oft der Fall ist, beispielsweise bei dem schon zuvor genannten Einsatzbeispiel bei der Betankung von Schiffen.

Bei einer Fortbildung des vorbeschriebenen Verfahrens ist vorgesehen, dass als weitere Eingangsgröße der Korrekturrechnung die Viskosität $\mu_{SP}$ des Einphasenmediums verwendet wird, insbesondere wobei die Viskosität $\mu_{SP}$ des Einphasenmediums ermittelt wird aus einer temperaturabhängigen Viskositätskurve unter Verwendung der Temperatur des Zweiphasenmediums. Temperaturabhängige Viskositätskurven können beispielsweise unter Laborbedingungen für verschiedene Medien aufgenommen und in dem jeweiligen Coriolis-Massedurchflussmessgerät abgelegt werden.

In einer weiter bevorzugten Ausgestaltung des Verfahrens ist vorgesehen, dass als weitere Eingangsgröße der Korrekturrechnung der Differenzdruck $P_{D}$ über die Einströmseite und die Ausströmseite des Coriolis-Massedurchflussmessgeräts verwendet wird, insbesondere wobei die im Zweiphasenmessintervall ermittelten Differenzdrücke $P_{D}$ zumindest teilweise gespeichert werden, besonders bevorzugt zu jedem gespeicherten Zweiphasen-Durchflussmesswert auch ein Differenzdruck $P_{D}$ gespeichert wird. Der Differenzdruck lasst sich sehr einfach zum BeispieHerrl mittels eines Differenzdrucksensors erfassen.

Es gibt ganz unterschiedliche Möglichkeiten, die zuvor genannte Korrekturrechnung ihrem Wesen nach zu ermitteln und auch in einem Coriolis-Massedurchflussmessgerät als Algorithmus zu hinterlegen. Wenn der genaue funktionale Zusammenhang zwischen den Eingangsgrößen und der gewünschten Ausgangsgröße, also dem korrigierten Zweiphasen-Durchflussmesswert, nicht bekannt ist, also der Zusammenhang durch exakter Rechenverfahren analytisch oder numerisch nicht ohne weiteres abbildbar ist, hat es sich als vorteilhaft herausgestellt, ein approximatives Lösungsverfahren zu verwenden. Lösungsverfahren dieser Klasse werden fachsprachlich unter dem Begriff Soft-Computing geführt. Eine Weiterbildung des Verfahrens zeichnet sich deshalb dadurch aus, dass die Korrekturrechnung mit einem approximativen Lösungsverfahren implementiert ist, bei dem die Eingangsgrößen der Korrekturrechnung, also zumindest die gespeicherten Zweiphasen-Durchflussmesswerte und die wenigstens eine im Einphasenmessintervall ermittelte Zustandsgröße des Einphasenmediums als zumindest mittelbare Eingangsgrößen, approximativ abgebildet werden auf die korrigierten Zweiphasen-Durchflussmesswerte. Bevorzugt wird das approximative Lösungsverfahren durch ein künstliches neuronales Netzwerk oder durch eine Support Vector Machine implementiert.

Als besonders geeignet hat sich herausgestellt, dass die Korrekturrechnung durch ein künstliches neuronales Netzwerk implementiert ist mit einer Eingangsschicht mit wenigstens zwei Eingangsneuronen zur Einspeisung der zu korrigierenden gespeicherten Zweiphasen-Durchflussmesswerte und zur Einspeisung der im Einphasenmessintervall ermittelten Zustandsgröße des Einphasenmediums oder einer davon abgeleiteten Größe als zumindest mittelbare Eingangsgrößen, mit einer Ausgangsschicht mit einem Ausgangsneuron zur Ausgabe der nachträglich korrigierten Zweiphasen-Durchflussmesswerte, und mit mindestens einer Zwischenschicht mit mindestens zwei Neuronen. das künstliche neuronale Netzwerk wird vorzugsweise als voll vernetztes Netzwerk ausgeführt, bei dem jedes Eingangsneuron mit jedem Neuron der Zwischenschicht über gerichtete und gewichtete Signalpfade verbunden ist und wobei jedes Neuron der Zwischenschicht über einen gerichteten und gewichteten Signalpfad mit dem Ausgangsneuron der Ausgangsschicht verbunden ist. Die Neuronen der Zwischenschicht summieren die über die gewichteten Signalpfade eingehenden Eingangswerte und werten sie über eine Aktivierungsfunktion aus. Die Neuronen der Zwischenschicht werden ferner noch mit einem Offsetwert beaufschlagt.

Bei einer bevorzugten Variante des Verfahrens weist das künstliche neuronale Netzwerk wenigstens vier Eingangsneuronen in der Eingangsschicht auf zur Einspeisung der zu korrigierenden gespeicherten Zweiphasen-Durchflussmesswerte, des Gas-Volumen-Anteils GVF des Zweiphasenmediums, der Viskosität $\mu_{SP}$ des Einphasenmediums und des Differenzdrucks $P_D$ über die Einströmseite und die Ausströmseite des Coriolis-Massedurchflussmessgeräts. Ferner weist das künstliche neuronale Netzwerk ein Ausgangsneuron zur Ausgabe der nachträglich korrigierten Zweiphasen-Durchflussmesswerte auf und vier Neuronen in einer Zwischenschicht, wobei jedes Eingangsneuron mit jedem Neuron der Zwischenschicht über gerichtete und gewichtete Signalpfade verbunden ist und wobei jedes Neuron der Zwischenschicht über einen gerichteten und gewichteten Signalpfad mit dem Ausgangsneuron der Ausgangsschicht verbunden ist und mit einem Offsetwert beaufschlagt wird.

Bei der Implementierung der Korrekturrechnung als künstliches neuronales Netzwerk ist weiter vorgesehen, dass das künstliche neuronale Netzwerk mit einem Trainingsdatensatz trainiert wird, wobei der Trainingsdatensatz für einen Bautyp eines Coriolis-Massedurchflussmessgeräts erhoben wird und der Trainingsdatensatz Wertetupel aus den verwendeten Eingangsgrößen des künstlichen neuronalen Netzwerks und der Ausgangsgröße des künstlichen neuronalen Netzwerks umfasst. Ein solcher Trainingsdatensatz wird beispielsweise unter Laborbedingungen erfasst. Vorzugsweise wird dabei der Durchfluss über zumindest 80 % des Messbereichs variiert, insbesondere wobei der Gas-Volumen-Anteil GVF des Zweiphasenmediums mindestens im Bereich wischen 0 % und 60 % variiert wird.

Vorzugsweise wird für jeweils ein bestimmtes Zweiphasenmedium ein Trainingsdatensatz erhoben und für jedes Zweiphasenmedium ein separates künstliches neuronales Netzwerk trainiert. Aus den verschiedenen trainierten künstlichen neuronalen Netzwerken werden dann Datensätze erhalten, die die Gewichte der verschiedenen Signalpfade und auch die Offsetwerte der Neuronen der Zwischenschicht enthalten. Damit kann dann für jedes Zweiphasen Medium ein strukturell gleichartig implementiertes künstliches neuronales Netzwerk parametriert werden.

Alle zuvor beschriebenen Varianten des erfindungsgemäßen Verfahrens können online durchgeführt werden. Es wird dann also in Echtzeit der Startzeitpunkt des Zweiphasenmessintervalls ermittelt, es werden die darauffolgenden Zweiphasen-Durchflussmesswerte abgespeichert bis das Ende des Zweiphasenmessintervall erkannt wird. Es kann dann die Korrekturrechnung eingeleitet werden und korrigierte Durchflussmesswerte (einzeln oder als kumuliertes Messergebnis) ausgegeben werden. Es kann aber auch so vorgegangen werden, dass während eines Messvorgangs, beispielsweise während eines Abfüllvorgangs, alle Durchflussmesswerte abgespeichert werden, dass nach dem abgeschlossenen Messvorgang aus den abgespeicherten Durchflussmesswerten oder anderen aufgezeichneten Daten das Einphasenmessintervall und das Zweiphasenmessintervall ermittelt werden und die Korrekturrechnung dann durchgeführt wird.

Die beschriebene Aufgabe wird auch bei dem eingangs genannten Coriolis-Massdurchflussmessgerät gemäss Anspruch 13 dadurch gelöst, dass diese so hergerichtet ist, dass sie das vorgeschriebene Verfahren ausführen kann. Dies bedeutet, dass die Ansteuerungs- und Auswerteeinheit so ausgestaltet ist, dass beim Vorliegen einer Zweiphasenströmung eines Zweiphasenmediums mit Gasphase in einem Zweiphasenmessintervall und einem daran anschließenden Vorliegen einer Einphasenströmung eines Einphasenmediums ohne Gasphase in einem Einphasenmessintervall, der Startzeitpunkt des Zweiphasenmessintervalls beim Einsetzen der Zweiphasenströmung bestimmt wird, dass der Endzeitpunkt des Zweiphasenmessintervalls zum Ende des Vorliegens der Zweiphasenströmung bestimmt wird, dass die im Zweiphasenmessintervall ermittelten Zweiphasen-Durchflussmesswerte der Zweiphasenströmung zumindest teilweise gespeichert werden, dass im Einphasenmessintervall wenigstens eine Zustandsgröße des Einphasenmediums ermittelt wird, dass aus den gespeicherten Zweiphasen-Durchflussmesswerten und aus der wenigstens einen im Einphasenmessintervall ermittelten Zustandsgröße des Einphasenmediums als zumindest mittelbare Eingangsgrößen einer Korrekturrechnung nachträglich korrigierte Zweiphasen-Durchflussmesswerte ermittelt werden und dass die korrigierten Zweiphasen-Durchflussmesswerte als Einzelwerte ausgegeben werden oder als Teil eines kumulierten Durchflussmesswertes ausgegeben werden. Vorzugsweise ist die Ansteuerung- und Auswerteeinheit so ausgebildet, dass sie auch alle zuvor beschriebenen bevorzugten Ausgestaltungen und Varianten des Verfahrens im Betrieb des Coriolis-Massedurchflussmessgeräts implementiert.

Aus dem Stand der Technik sind verschiedene Möglichkeiten bekannt, wie die Detektion einer Zweiphasenströmung von statten gehen kann. Hier wird die DE 10 2006 017 676 A1 exemplarisch genannt für die reine Detektion einer Zweiphasenströmung, wobei verschiedene Zustandsgrößen und Änderungen dieser Zustandsgrößen - teilweise statistisch - ausgewertet werden, um ein Zweiphasen-Signal zu erhalten, das das Vorliegen bzw. das Nicht-Vorliegen einer Zweiphasenströmung mit großer Treffsicherheit indiziert.

Bei der Realisierung des hier beschriebenen Coriolis-Massedurchflussmessgeräts ist vorzugsweise vorgesehen, dass der Startzeitpunkt des Zweiphasenmessintervalls beim Einsetzen der Zweiphasenströmung und/oder dass der Endzeitpunkt des Zweiphasenmessintervalls zum Ende des Vorliegens der Zweiphasenströmung bestimmt wird durch Auswertung der Höhe des Anregungssignals des Schwingungserzeugers und/oder durch Auswertung der Höhe des Sensorsignals des Schwingungsaufnehmers. Insbesondere der Startzeitpunkt des Zweiphasenmessintervalls wird festgestellt bei Überschreiten einer Grenzhöhe des Anregungssignals und/oder des Sensorsignals, und insbesondere wird der Endzeitpunkt des Zweiphasenmessintervalls festgestellt bei Unterschreiten einer Grenzhöhe des Anregungssignals und/oder des Sensorsignals. Es können auch andere Größen als Indikatoren für das Vorliegen einer Zweiphasenströmung verwendet werden, wie beispielsweise die Standardabweichung des Massedurchflusses (klein bei Einphasenströmung, deutlich größer bei Zweiphasenströmung), die Schallemission am Messort (klein bei Einphasenströmung, größer bei Zweiphasenströmung), Vibrationen am Messgerät oder verbundenen Leitungen (klein bei Einphasenströmung, deutlich größer bei Zweiphasenströmung).

Im Einzelnen gibt es nun eine Vielzahl von Möglichkeiten, das erfindungsgemäße Verfahren und das erfindungsgemäße Coriolis-Massedurchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen

Fig. 1 schematisch und exemplarisch den Aufbau eines Coriolis-Massedurchflussmessgeräts,

Fig. 2 beispielhaft den zeitlichen Verlauf verschiedener relevanter physikalischer Größen bei einem typischen Betankungsvorgang eines Schiffes mit Zweiphasenströmung und anschließender Einphasenströmung,

Fig. 3 schematisch ein Verfahren zur Ermittlung von korrigierten Durchflussmesswerten eines Coriolis-Massedurchflussmessgeräts,

Fig. 4 schematisch ein weiteres Ausführungsbeispiel für ein Verfahren zur Ermittlung von korrigierten Durchflussmesswerten eines Coriolis-Massedurchflussmessgeräts,

Fig. 5 ein Ausführungsbeispiel für die Umsetzung einer Korrekturrechnung innerhalb des hier interessierenden Verfahrens mithilfe eines künstlichen neuronalen Netzwerkes und

Fig. 6 ein weiteres Ausführungsbeispiel für die Umsetzung einer Korrekturrechnung innerhalb des hier interessierenden Verfahrens mithilfe eines erweiterten künstlichen neuronalen Netzwerkes.

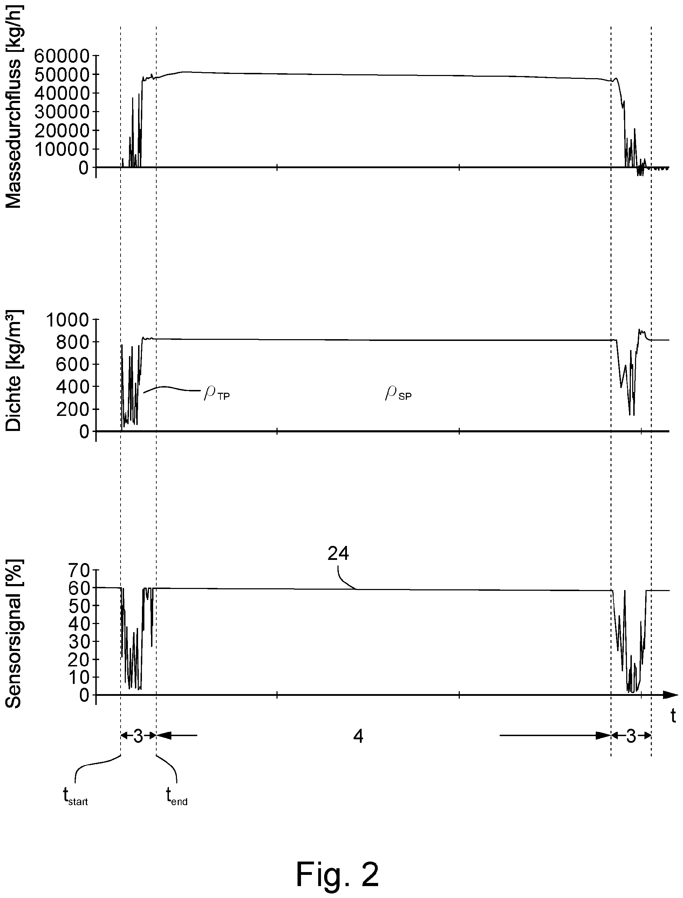

In allen Figuren ist ein Verfahren 1 zur Ermittlung von Durchflussmesswerten eines Coriolis-Massedurchflussmessgeräts 2 - in Gänze oder teilweise - dargestellt. Fig. 2 zeigt schematisch ein Coriolis-Massedurchflussmessgerät 2, bei dem das nachfolgend beschriebene Verfahren 1 zur Ermittlung von Durchflussmesswerten realisiert ist.

Allen gezeigten Ausführungsbeispielen ist gemeinsam, dass es um die Ermittlung von Durchflussmesswerten eines Coriolis-Massedurchflussmessgerät 2 beim Vorliegen einer Zweiphasenströmung eines Zweiphasenmediums mit Gasphase in einem Zweiphasenmessintervall 3 und einem daran anschließenden Vorliegen einer Einphasenströmung eines Einphasenmediums ohne Gasphase in einem Einphasenmessintervall 4 geht.

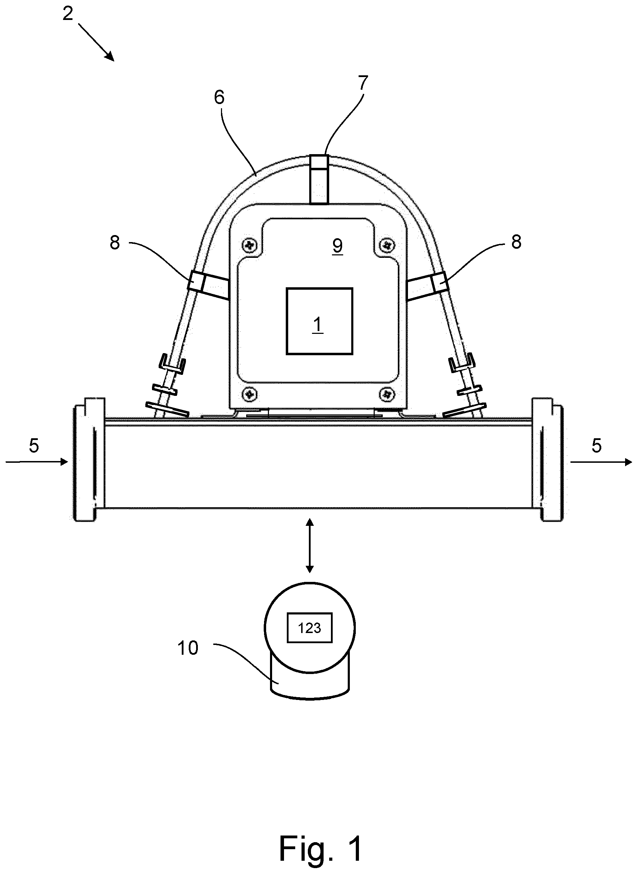

In Fig. 1 ist schematisch ein Coriolis-Massedurchflussmessgerät 2 dargestellt mit einem von einem Medium 5 (angedeutet durch die horizontal verlaufenden Pfeile von links nach rechts) durchströmbarem Messrohr 6, einem Schwingungserzeuger 7, zwei Schwingungsaufnehmern 8 und einer Ansteuerungs- und Auswerteeinheit 9. Durchflussmesswerte können hier auf der Anzeigeeinheit 10 dargestellt werden. das hier exemplarisch dargestellte Coriolis-Massedurchflussmessgerät 2 verfügt über ein V-förmig gebogenes Messrohr 6. Genauso gut lässt sich das Coriolis-Massedurchflussmessgerät 2 in jeder beliebigen anderen Bauform ausführen, also beispielsweise mit geraden Messrohren, mit U- oder Omega-förmigen Messrohren usw.; auf die gewählte Bauweise eines Coriolis-Massedurchflussmessgeräts kommt es nicht an. Die Ansteuerung- und Auswerteeinheit 9 basiert auf einem Kleinrechner mit einem digitalen Signalprozessor und mit I/O-Schnittstellen, über die der Schwingungserzeuger 7 angesteuert werden kann und über die die Sensorsignale 24 der Schwingungsaufnehmer 8 messtechnisch erfasst werden können. Durch geeignete Programmierung der Ansteuerung- und Auswerteeinheit 9 wird das hier beschriebene Verfahren 1 zur Ermittlung von Durchflussmesswerten in dem Coriolis-Massedurchflussmessgerät 2 implementiert.

Fig. 2 zeigt anhand der zeitlichen Kurvenverläufe von Masse-Durchfluss, Dichte des Mediums und des Sensorsignals 24 eines Schwingungsaufnehmers den typischen Verlauf eines Abfüllvorgangs am Beispiel der Betankung eines Schiffes, bei dem sowohl eine Zweiphasenströmung und auch eine daran anschließende Einphasenströmung vorliegt. Ganz zu Beginn des Abfüllvorganges ist der Treibstoff mit einer Gasphase durchmischt, sodass eine Zweiphasenströmung in dem Zweiphasenmessintervall 3 vorliegt. Der Gasanteil in dem Zweiphasenmedium variiert hier stark, entsprechend variieren auch die Durchflussmesswerte und die ermittelte Dichte $\rho_{TP}$ des Zweiphasenmediums. Auch die Amplitude des Sensorsignals 24 eines der Schwingungsaufnehmer 8 ist starken Schwankungen unterworfen, was charakteristisch für eine Zweiphasenströmung ist.

Der Bereich der Zweiphasenströmung im Zweiphasenmessintervall 3 ist messtechnisch problematisch, die erzielbare Messgenauigkeit ist nicht selten um eine oder sogar um zwei Zehnerpotenzen schlechter als die Messgenauigkeit im Bereich der Einphasenströmung im Einphasenmessintervall 4.

Dem erfindungsgemäßen Verfahren 1 liegt die Idee zugrunde, die ungenauen Zweiphasen-Durchflussmesswerte $q_{TP, meas}$ zunächst abzuspeichern und später einer Korrekturrechnung zuzuführen in Kenntnis von im Einphasenmessintervall 4 mit hoher Genauigkeit ermittelten Zustandsgrößen $x_{SP}$ des Einphasenmediums.

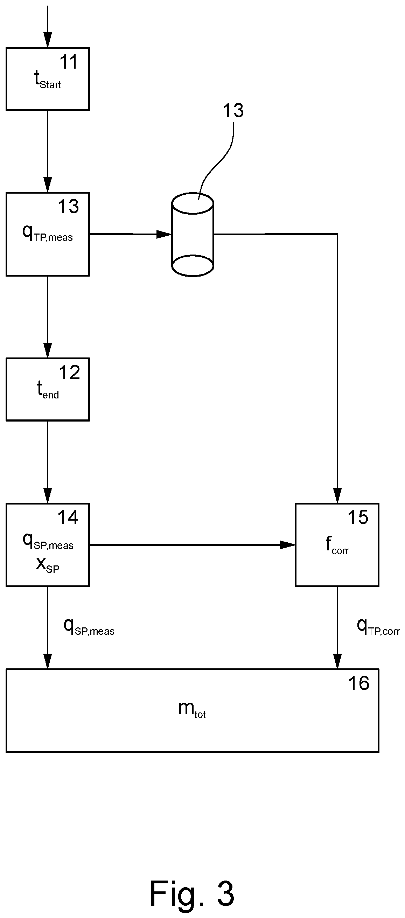

Fig. 3 zeigt ein Ausführungsbeispiel des Verfahrens 1 anhand eines Ablaufdiagramms. Es wird der Startzeitpunkt $t_{start}$ des Zweiphasenmessintervalls 3 beim Einsetzen der Zweiphasenströmung bestimmt 11, ebenso wie der Endzeitpunkt $t_{end}$ des Zweiphasenmessintervalls 3 zum Ende des Vorliegens der Zweiphasenströmung bestimmt 12. Im Zweiphasenmessintervall 3 werden Zweiphasen-Durchflussmesswerte $q_{TP, meas}$ der Zweiphasenströmung ermittelt und zumindest teilweise gespeichert 13. Ferner wird im Einphasenmessintervall 4 zumindest eine Zustandsgröße $x_{SP}$ des Einphasenmediums ermittelt 14. Aus den gespeicherten Zweiphasen-Durchflussmesswerten $q_{TP, meas}$ und aus der im Einphasenmessintervall 4 ermittelten Zustandsgröße $x_{SP}$ des Einphasenmediums als zumindest mittelbare Eingangsgrößen einer Korrekturrechnung $f_{corr}$ werden dann nachträglich korrigierte Zweiphasen-Durchflussmesswerte $q_{TP, corr}$ ermittelt 15. Die korrigierten Zweiphasen-Durchflussmesswerte $q_{TP, corr}$ werden in diesem Ausführungsbeispiel als Teil eines kumulierten Durchflussmesswertes $m_{tot}$ ausgegeben 16.

Es stellt sich natürlich die Frage, welche konkrete Zustandsgröße $x_{SP}$ des Einphasenmediums geeignet ist, um als zumindest mittelbare Eingangsgrößeneiner Korrekturrechnung $f_{corr}$ sinnvoll verwendet werden zu können; dazu müssen die tatsächlich vorliegenden Zweiphasen-Durchflussmesswerte in einer Abhängigkeit zu der Zustandsgröße stehen. In den hier gezeigten Ausführungsbeispielen wird als Zustandsgröße des Einphasenmediums - jedenfalls auch - die Dichte $\rho_{SP}$ des Einphasenmediums ermittelt und als zumindest mittelbare Eingangsgröße der Korrekturrechnung $f_{corr}$ verwendet. Die Dichte $\rho_{SP}$ des Einphasenmediums lässt sich mit einem Coriolis-Massedurchflussmessgerät bestimmen, da sich die Dichte des in den Messrohren 6 strömenden Mediums 5 auf die Eigenkreisfrequenz des angeregten Schwingungsmode des Messrohrs 6 (oder mehrerer Messrohre 6) auswirkt.

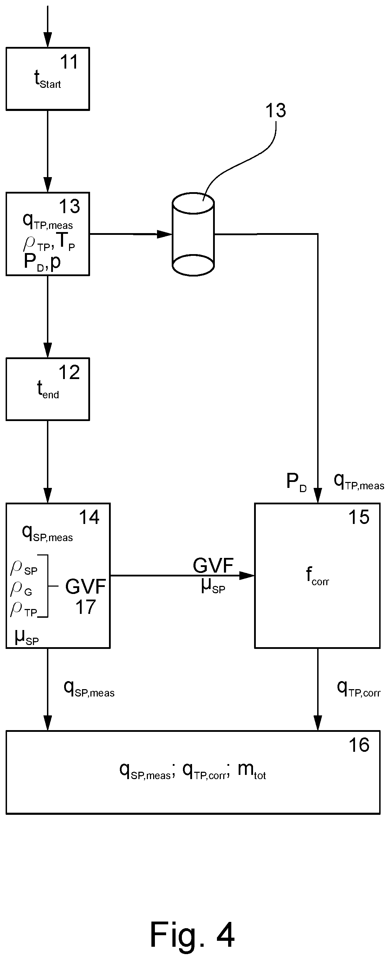

Wie in Fig. 4 angedeutet ist, wird mit der Dichte $\rho_{SP}$ des Einphasenmediums der Gas-Volumen-Anteil GVF des Zweiphasenmediums berechnet 17 wird und der berechnete Gas-Volumen-Anteil GVF des Zweiphasenmediums als direkte Eingangsgröße der Korrekturrechnung $f_{corr}$ verwendet, wobei der Gas-Volumen-Anteil GVF des Zweiphasenmediums durch Bildung des Quotienten aus der Differenz aus der Dichte $\rho_{SP}$ des Einphasenmediums und der Dichte $\rho_{TP}$ des Zweiphasenmediums und der Differenz aus der Dichte $\rho_{SP}$ des Einphasenmediums und der Dichte $\rho_{G}$ der Gasphase des Zweiphasenmediums berechnet wird. Die Dichte $\rho_{TP}$ des Zweiphasenmediums kann beispielsweise so bestimmt werden wie die Dichte $\rho_{SP}$ des Einphasenmediums.

Bei dem in Fig. 4 dargestellten Verfahren 1 wird die Dichte $\rho_{G}$ der Gasphase des Zweiphasenmediums bestimmt, indem die Temperatur $T_{TP}$ des Zweiphasenmediums gemessen wird und der Druck p am Ausgang des Coriolis-Massedurchflussmessgeräts 2 gemessen wird und die Dichte $\rho_{G}$ der Gasphase des Zweiphasenmediums basierend auf der gemessenen Temperatur $T_{TP}$ des Zweiphasenmediums und basierend auf dem gemessenen Druck p an der Ausströmseite des Coriolis-Massedurchflussmessgeräts bestimmt wird.

Wie ebenfalls in Fig. 4 zu sehen ist, wird als weitere Eingangsgröße der Korrekturrechnung $f_{corr}$ die Viskosität $\mu_{SP}$ des Einphasenmediums verwendet. Die Viskosität $\mu_{SP}$ des Einphasenmediums wird ermittelt aus einer temperaturabhängigen Viskositätskurve unter Verwendung der Temperatur $T_{TP}$ des Zweiphasenmediums; die temperaturabhängige Viskositätskurve ist hier nicht separat dargestellt..

Ferner wird bei dem Verfahren 1 gemäß Fig. 4 als weitere Eingangsgröße der Korrekturrechnung $f_{corr}$ der Differenzdruck $P_D$ über die Einströmseite und die Ausströmseite des Coriolis-Massedurchflussmessgeräts 2 verwendet, wobei die im Zweiphasenmessintervall 3 ermittelten Differenzdrücke $P_D$ ebenfalls zumindest teilweise gespeichert 13 werden. Vorliegend wird zu jedem gespeicherten Zweiphasen-Durchflussmesswert $q_{TP, meas}$ auch ein Differenzdruck $P_D$ gespeichert.

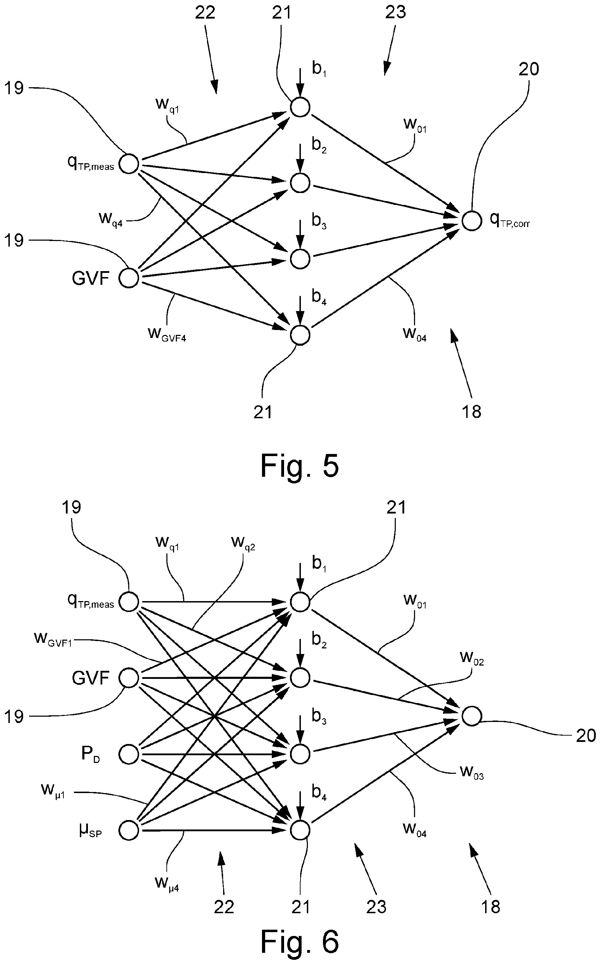

Für die dargestellten Ausführungsbeispiele für das Verfahren 1 trifft zu, dass die Korrekturrechnung $f_{corr}$ mit einem approximativen Lösungsverfahren implementiert ist, bei dem die Eingangsgrößen der Korrekturrechnung $f_{corr}$, also zumindest die gespeicherten Zweiphasen-Durchflussmesswerte $q_{TP}$ und die wenigstens eine im Einphasenmessintervall 4 ermittelte Zustandsgröße $x_{SP}$ des Einphasenmediums als zumindest mittelbare Eingangsgrößen (Fig. 3), approximativ abgebildet werden auf die korrigierten Zweiphasen-Durchflussmesswerte $q_{TP, corr}$. Diese approximativen Lösungsverfahren sind hier sämtlich durch ein künstliches neuronales Netzwerk 18 implementiert, was in den Fig. 5 und 6 näher dargestellt ist.

Fig. 5 zeigt, dass die Korrekturrechnung $f_{corr}$ durch ein künstliches neuronales Netzwerk 18 implementiert ist mit einer Eingangsschicht mit zwei Eingangsneuronen 19 zur Einspeisung der zu korrigierenden gespeicherten Zweiphasen-Durchflussmesswerte $q_{TP}$ und zur Einspeisung der im Einphasenmessintervall 4 ermittelten Zustandsgröße $x_{SP}$ des Einphasenmediums (Dichte $\rho_{SP}$ des Einphasenmediums). Tatsächlich wird nicht die Dichte $\rho_{SP}$ des Einphasenmediums eingespeist, sondern der Gas-Volumen Anteil GVR als eine von der Dichte $\rho_{SP}$ des Einphasenmediums abgeleitete Größe. Ferner ist eine Ausgangsschicht mit einem Ausgangsneuron 20 zur Ausgabe der nachträglich korrigierten Zweiphasen-Durchflussmesswerte $q_{TP, corr}$ vorgesehen und eine Zwischenschicht mit vier Neuronen 21. Jedes Eingangsneuron 19 ist mit jedem Neuron 21 der Zwischenschicht über gerichtete und gewichtete Signalpfade 22 verbunden und jedes Neuron 21 der Zwischenschicht ist über einen gerichteten und gewichteten Signalpfad 23 mit dem Ausgangsneuron 20 der Ausgangsschicht verbunden. Jedes Neuron 21 der Zwischenschicht wird mit einem Offsetwert $b_i$ beaufschlagt. Die Wichtungen der Signalpfade sind mit w bezeichnet, wobei aus Gründen der Übersichtlichkeit nicht alle Wichtungen aller Signalpfade 22 eingezeichnet worden sind.

Das Ausführungsbeispiel gemäß Fig. 6 zeichnet sich dadurch aus, dass das künstliche neuronale Netzwerk 18 vier Eingangsneuronen 19 in der Eingangsschicht aufweist zur Einspeisung der zu korrigierenden gespeicherten Zweiphasen-Durchflussmesswerte $q_{TP, meas}$, des Gas-Volumen-Anteils GVF des Zweiphasenmediums, der Viskosität $\mu_{SP}$ des Einphasenmediums und des Differenzdrucks $P_D$ über die Einströmseite und die Ausströmseite des Coriolis-Massedurchflussmessgeräts 2. Wie im vorigen Ausführungsbeispiel weist das künstliches neuronales Netzwerk 18 ein Ausgangsneuron 20 zur Ausgabe der nachträglich korrigierten Zweiphasen-Durchflussmesswerte $q_{TP, corr}$ und vier Neuronen 21 in einer Zwischenschicht auf, wobei jedes Eingangsneuron 19 mit jedem Neuron 21 der Zwischenschicht über gerichtete und gewichtete Signalpfade 22 verbunden ist und wobei jedes Neuron 21 der Zwischenschicht über einen gerichteten und gewichteten Signalpfad 23 mit dem Ausgangsneuron 20 der Ausgangsschicht verbunden ist und insbesondere jedes Neuron 21 der Zwischenschicht mit einem Offsetwert $b_i$ beaufschlagt wird. Wie in Fig. 5 sind auch hier nicht sämtliche Wichtungen w der Signalpfade 22, 23 eingezeichnet worden.

Die künstlichen neuronalen Netzwerke 18 gemäß den Fig 5 und 6 werden, um einsatzfähig zu sein, mit einem Trainingsdatensatz trainiert, wobei der Trainingsdatensatz für einen Bautyp eines Coriolis-Massedurchflussmessgeräts 2 erhoben wird. Vorliegend ist dies unter Laborbedingungen geschehen. Der Trainingsdatensatz umfasst Wertetupel aus den verwendeten Eingangsgrößen der künstlichen neuronalen Netzwerke 18 und der Ausgangsgröße des künstlichen neuronalen Netzwerks 18, also dem - möglichst fehlerfreien - Wert für den Durchfluss. Im hier gezeigten Beispiel ist zur Erstellung des Trainingsdatensatzes der Durchfluss über etwa 80 % des Messbereichs variiert worden, zudem ist der Gas-Volumen-Anteil GVF des Zweiphasenmediums im Bereich etwa zwischen 0 % und 60 % variiert worden.

Das Training der künstlichen neuronalen Netzwerke 18 gemäß den Fig. 5 und 6 geschieht in einem iterativen Optimierungsprozess. Das künstliche neuronale Netzwerk 18 wird wiederholt mit den Eingangsdaten der zusammengehörenden Wertetupel gespeist und es resultiert jeweils ein Wert am Ausgang des künstlichen neuronalen Netzwerks 18 für den korrigierten Zweiphasen-Durchflussmesswert $q_{TP, corr}$. Dieser Wert wird verglichen mit dem im Wertetupel des Trainingsdatensatzes enthaltenen Wert für den Durchfluss der Zweiphasenströmung. Idealerweise ist der von dem künstlichen neuronalen Netzwerk 18 berechnete Wert möglichst gleich (oder möglichst ähnlich) dem exakten Wert aus dem entsprechenden Wertetupel des Trainingsdatensatzes. Beim Training des Netzes wird die Abweichung beider Werte voneinander (Differenz, Betrag der Differenz, Fehlerquadrat usw.) dann minimiert durch geeignete Veränderung der Wichtungen wi der Signalpfade und auch der Offsetwerte $b_i$ der neuronalen Knoten 21 der Zwischenschicht (z. B. Gradienten-Abstiegsverfahren). Die Tauglichkeit des so entstehenden künstlichen neuronalen Netzwerks 18 wird überprüft mit einem Teil des Trainingsdatensatzes, mit dem das künstliche neuronale Netzwerk 18 gerade nicht trainiert worden ist. Ist die Abweichung der korrigierten Zweiphasen-Durchflussmesswerte des künstlichen neuronalen Netzwerkes 18 von den exakten Ergebnissen des Trainingsdatensatzes unter einer tolerierbaren Schwelle, wird das Training abgebrochen und das trainierte künstliche neuronale Netzwerk 18 setzt dann die Korrekturrechnung $f_{corr}$ approximativ um.

Eine in den Figuren nicht separat dargestellte Variante des Verfahrens 1 besteht darin, dass während eines Messvorgangs, beispielsweise während eines Abfüllvorgangs, alle Durchflussmesswerte $q_{TP}$, $q_{SP}$ abgespeichert werden, also sowohl die der Zweiphasenströmung wie auch die der Einphasenströmung. Nach dem abgeschlossenen Messvorgang werden aus den abgespeicherten Durchflussmesswerten oder anderen aufgezeichneten Daten das Einphasenmessintervall 4 und das Zweiphasenmessintervall 3 ermittelt, dann wird die Korrekturrechnung $f_{corr}$ durchgeführt.

Wie zuvor schon beschrieben worden ist, ist das Verfahren 1 in dem Coriolis-Massedurchflussmessgerät 2 umgesetzt, indem die Ansteuerungs- und Auswerteeinheit 9 so ausgestaltet ist, dass beim Vorliegen einer Zweiphasenströmung eines Zweiphasenmediums mit Gasphase in einem Zweiphasenmessintervall 3 und einem daran anschließenden Vorliegen einer Einphasenströmung eines Einphasenmediums ohne Gasphase in einem Einphasenmessintervall 4, der Startzeitpunkt $t_{start}$ des Zweiphasenmessintervalls 3 beim Einsetzen der Zweiphasenströmung bestimmt wird, dass der Endzeitpunkt $t_{end}$ des Zweiphasenmessintervalls 3 zum Ende des Vorliegens der Zweiphasenströmung bestimmt wird, dass im Zweiphasenmessintervall (3) Zweiphasen-Durchflussmesswerte $q_{TP, meas}$ der Zweiphasenströmung ermittelt werden und zumindest teilweise gespeichert werden 13, dass im Einphasenmessintervall 4 wenigstens eine Zustandsgröße $x_{SP}$ des Einphasenmediums ermittelt wird 14, dass aus den gespeicherten Zweiphasen-Durchflussmesswerten $q_{TP, meas}$ und aus der wenigstens einen im Einphasenmessintervall 4 ermittelten Zustandsgröße $x_{SP}$ des Einphasenmediums als zumindest mittelbare Eingangsgrößen einer Korrekturrechnung $f_{corr}$ nachträglich korrigierte Zweiphasen-Durchflussmesswerte $q_{TP, corr}$ ermittelt werden 15 und dass die korrigierten Zweiphasen-Durchflussmesswerte $q_{TP, corr}$ als Einzelwerte ausgegeben werden oder als Teil eines kumulierten Durchflussmesswertes $m_{tot}$ ausgegeben werden 16.

Die Ansteuerungs- und Auswerteeinheit 9 ist in Fig. 1 so ausgestaltet, dass das Coriolis-Massedurchflussmessgerät 2 in der Lage ist, die zuvor beschriebenen Ausgestaltungen des Verfahrens 1 durchzuführen.

Das in Fig. 1 dargestellte Coriolis-Massedurchflussmessgerät ist vor allem so ausgestaltet, dass der Startzeitpunkt $t_{start}$ des Zweiphasenmessintervalls 3 beim Einsetzen der Zweiphasenströmung und der Endzeitpunkt $t_{end}$ des Zweiphasenmessintervalls 3 zum Ende des Vorliegens der Zweiphasenströmung bestimmt wird durch Auswertung der Höhe des Sensorsignals 24 des Schwingungsaufnehmers 8. Hier wird der Startzeitpunkt $t_{start}$ des Zweiphasenmessintervalls 3 festgestellt bei Überschreiten einer Grenzhöhe des Sensorsignals 24, und der Endzeitpunkt $t_{end}$ des Zweiphasenmessintervalls 3 wird festgestellt bei Unterschreiten einer Grenzhöhe des Sensorsignals 2, wozu auf Fig. 2 verwiesen wird.

**Bezugszeichen**

1 Verfahren
2 Coriolis-Massedurchflussmessgerät
3 Zweiphasenmessintervall
4 Einphasenmessintervall
5 strömendes Medium
6 Messrohr
7 Schwingungserzeuger
8 Schwingungsaufnehmer
9 Ansteuerung- und Auswerteeinheit
10 Anzeigeeinheit

11 Bestimmung Startzeitpunkt $t_{start}$ des Zweiphasenmessintervalls
12 Bestimmung Endzeitpunkt $t_{end}$ des Zweiphasenmessintervalls
13 Ermittlung und Speicherung der gemessenen ZweiphasenDurchflussmesswerte $q_{TP, meas}$
14 Ermitteln einer Zustandsgröße $x_{SP}$ des Einphasenmediums
15 Ermitteln korrigierter Zweiphasen-Durchflussmesswerte $q_{TP, corr}$
16 Ausgeben korrigierter Zweiphasen-Durchflussmesswerte
17 Berechnung des Gas-Volumen-Anteils des Zweiphasenmediums
18 künstliches neuronales Netzwerk
19 Eingangsneuron
20 Ausgangsneuron
21 Neuron der Zwischenschicht
22 gewichtete Signalpfade
23 gewichtete Signalpfade

24 Sensorsignal des Schwingungsaufnehmers

$\rho_{TP}$   Dichte des Zweiphasenmediums
$\rho_{SP}$   Dichte des Einphasenmediums
$t_{start}$   Startzeitpunkt des Zweiphasenmessintervalls
$t_{end}$   Startzeitpunkt des Einphasenmessintervalls
$x_{SP}$   Zustandsgröße des Einphasenmediums
$q_{TP, meas}$   Zweiphasen-Durchflussmesswerte
$q_{TP, corr}$   korrigierte Zweiphasen-Durchflussmesswerte
$f_{corr}$   Korrekturrechnung
GVF   Gas-Volumen-Anteil
$T_{TP}$   Temperatur des Zweiphasenmediums
p   Druck am Ausgang des Coriolis-Massedurchflussmessgerät
$\mu_{SP}$   Viskosität des Einphasenmediums
$P_D$   Differenzdruck über die Einströmseite und die Ausströmseite des Coriolis-Massedurchflussmessgeräts

**Patentansprüche**

1. Verfahren (1) zur Ermittlung von Durchflussmesswerten eines Coriolis-Massedurchflussmessgeräts (2) beim Vorliegen einer Zweiphasenströmung eines Zweiphasenmediums mit Gasphase in einem Zweiphasenmessintervall (3) und einem daran anschließenden Vorliegen einer Einphasenströmung eines Einphasenmediums ohne Gasphase in einem Einphasenmessintervall (4),

    wobei der Startzeitpunkt $t_{start}$ des Zweiphasenmessintervalls (3) beim Einsetzen der Zweiphasenströmung bestimmt wird (11),
    wobei der Endzeitpunkt $t_{end}$ des Zweiphasenmessintervalls (3) zum Ende des Vorliegens der Zweiphasenströmung bestimmt wird (12),
    wobei im Zweiphasenmessintervall (3) Zweiphasen-Durchflussmesswerte $q_{TP, meas}$ der Zweiphasenströmung ermittelt werden und zumindest teilweise gespeichert werden (13),
    wobei im Einphasenmessintervall (4) wenigstens eine Zustandsgröße $x_{SP}$ des Einphasenmediums ermittelt wird (14),

**dadurch gekennzeichnet, dass** aus den gespeicherten Zweiphasen-Durchflussmesswerten $q_{TP, meas}$ und aus der wenigstens einen im Einphasenmessintervall (4) ermittelten Zustandsgröße $x_{SP}$ des Einphasenmediums als zumindest mittelbare Eingangsgrößen einer Korrekturrechnung $f_{corr}$ nachträglich korrigierte Zweiphasen-Durchflussmesswerte $q_{TP, corr}$ ermittelt werden (15) und

dass die korrigierten Zweiphasen-Durchflussmesswerte $q_{TP, corr}$ als Einzelwerte ausgegeben werden oder als Teil eines kumulierten Durchflussmesswertes $m_{tot}$ ausgegeben werden (16).

2.  Verfahren (1) nach Anspruch 1, **dadurch gekennzeichnet, dass** als Zustandsgröße des Einphasenmediums zumindest die Dichte $\rho_{SP}$ des Einphasenmediums ermittelt und als zumindest mittelbare Eingangsgröße der Korrekturrechnung $f_{corr}$ verwendet wird.

3.  Verfahren (1) nach Anspruch 2, **dadurch gekennzeichnet, dass** mit der Dichte $\rho_{SP}$ des Einphasenmediums der Gas-Volumen-Anteil GVF des Zweiphasenmediums berechnet (17) wird und der berechnete Gas-Volumen-Anteil GVF des Zweiphasenmediums als direkte Eingangsgröße der Korrekturrechnung verwendet wird, wobei der Gas-Volumen-Anteil GVF des Zweiphasenmediums insbesondere durch Bildung des Quotienten aus der Differenz aus der Dichte $\rho_{SP}$ des Einphasenmediums und der Dichte $\rho_{TP}$ des Zweiphasenmediums und der Dichte $\rho_{SP}$ des Einphasenmediums berechnet wird, besonders bevorzugt durch Bildung des Quotienten aus der Differenz aus der Dichte $\rho_{SP}$ des Einphasenmediums und der Dichte $\rho_{TP}$ des Zweiphasenmediums und der Differenz aus der Dichte $\rho_{SP}$ des Einphasenmediums und der Dichte $\rho_{G}$ der Gasphase des Zweiphasenmediums berechnet wird.

4.  Verfahren (1) nach Anspruch 3, **dadurch gekennzeichnet, dass** die Dichte $\rho_{G}$ der Gasphase des Zweiphasenmediums bestimmt wird, indem die Temperatur $T_{TP}$ des Zweiphasenmediums gemessen wird und der Druck p am Ausgang des Coriolis-Massedurchflussmessgeräts (2) gemessen wird und die Dichte $\rho_{G}$ der Gasphase des Zweiphasenmediums basierend auf der gemessenen Temperatur $T_{TP}$ des Zweiphasenmediums und basierend auf dem gemessenen Druck p an der Ausströmseite des Coriolis-Massedurchflussmessgeräts (2) bestimmt wird.

5.  Verfahren (1) nach einem der Ansprüche 1 bis 4, **dadurch gekennzeichnet, dass** als weitere Eingangsgröße der Korrekturrechnung $f_{corr}$ die Viskosität $\mu_{SP}$ des Einphasenmediums verwendet wird, insbesondere wobei die Viskosität $\mu_{SP}$ des Einphasenmediums ermittelt wird aus einer temperaturabhängigen Viskositätskurve unter Verwendung der Temperatur $T_{TP}$ des Zweiphasenmediums.

6.  Verfahren (1) nach einem der Ansprüche 1 bis 5, **dadurch gekennzeichnet, dass** als weitere Eingangsgröße der Korrekturrechnung der Differenzdruck $P_{D}$ über die Einströmseite und die Ausströmseite des Coriolis-Massedurchflussmessgeräts (2) verwendet wird, insbesondere wobei die im Zweiphasenmessintervall ermittelten Differenzdrücke $P_{D}$ zumindest teilweise gespeichert werden, besonders bevorzugt zu jedem gespeicherten Zweiphasen-Durchflussmesswert auch ein Differenzdruck $P_{D}$ gespeichert wird.

7.  Verfahren (1) nach einem der Ansprüche 1 bis 6, **dadurch gekennzeichnet, dass** die Korrekturrechnung $f_{corr}$ mit einem approximativen Lösungsverfahren implementiert ist, bei dem die Eingangsgrößen der Korrekturrechnung $f_{corr}$, also zumindest die gespeicherten Zweiphasen-Durchflussmesswerte $q_{TP}$ und die wenigstens eine im Einphasenmessintervall (4) ermittelte Zustandsgröße $x_{SP}$ des Einphasenmediums als zumindest mittelbare Eingangsgrößen, approximativ abgebildet werden auf die korrigierten Zweiphasen-Durchflussmesswerte $q_{TP, corr}$, insbesondere wobei das approximative Lösungsverfahren durch ein künstliches neuronales Netzwerk (18) oder durch eine Support Vector Machine implementiert ist.

8.  Verfahren (1) nach Anspruch 7, **dadurch gekennzeichnet, dass** die Korrekturrechnung $f_{corr}$ durch ein künstliches neuronales Netzwerk (18) implementiert ist mit einer Eingangsschicht mit wenigstens zwei Eingangsneuronen (19) zur Einspeisung der zu korrigierenden gespeicherten Zweiphasen-Durchflussmesswerte $q_{TP}$ und zur Einspeisung der im Einphasenmessintervall (4) ermittelten Zustandsgröße $x_{SP}$ des Einphasenmediums oder einer davon abgeleiteten Größe als zumindest mittelbare Eingangsgrößen, mit einer Ausgangsschicht mit einem Ausgangsneuron (20) zur Ausgabe der nachträglich korrigierten Zweiphasen-Durchflussmesswerte $q_{TP, corr}$, und mit mindestens einer Zwischenschicht mit mindestens zwei Neuronen (21), wobei jedes Eingangsneuron (19) mit jedem Neuron (21) der Zwischenschicht über gerichtete und gewichtete Signalpfade (22) verbunden ist und wobei jedes Neuron (21) der Zwischenschicht über einen gerichteten und gewichteten Signalpfad (23) mit dem Ausgangsneuron (20) der Ausgangsschicht verbunden ist und insbesondere jedes Neuron (21) der Zwischenschicht mit einem Offsetwert $b_{i}$ beaufschlagt wird.

9.  Verfahren (1) nach Anspruch 8, **dadurch gekennzeichnet, dass** das künstliche neuronale Netzwerk (18) wenigstens vier Eingangsneuronen (19) in der Eingangsschicht aufweist zur Einspeisung der zu korrigierenden gespeicherten Zweiphasen-Durchflussmesswerte, des Gas-Volumen-Anteils GVF des Zweiphasenmediums, der Viskosität $\mu_{SP}$ des Einphasenmediums und des Differenzdrucks $P_D$ über die Einströmseite und die Ausströmseite des Coriolis-Massedurchflussmessgeräts (2), mit einem Ausgangsneuron (20) zur Ausgabe der nachträglich korrigierten Zweiphasen-Durchflussmesswerte $q_{TP, corr}$ und mit vier Neuronen (21) in einer Zwischenschicht, wobei jedes Eingangsneuron (19) mit jedem Neuron (21) der Zwischenschicht über gerichtete und gewichtete Signalpfade (22) verbunden ist und wobei jedes Neuron (21) der Zwischenschicht über einen gerichteten und gewichteten Signalpfad (23) mit dem Ausgangsneuron (20) der Ausgangsschicht verbunden ist und insbesondere jedes Neuron (21) der Zwischenschicht mit einem Offsetwert $b_i$ beaufschlagt wird.

10. Verfahren (1) nach Anspruch 8 oder 9, **dadurch gekennzeichnet, dass** das künstliche neuronale Netzwerk (18) mit einem Trainingsdatensatz trainiert wird, wobei der Trainingsdatensatz für einen Bautyp eines Coriolis-Massedurchflussmessgeräts (2) erhoben wird und der Trainingsdatensatz Wertetupel aus den verwendeten Eingangsgrößen des künstlichen neuronalen Netzwerks (18) und der Ausgangsgröße des künstlichen neuronalen Netzwerks (18) umfasst, insbesondere wobei der Durchfluss über zumindest 80 % des Messbereichs variiert wird, insbesondere wobei der Gas-Volumen-Anteil GVF des Zweiphasenmediums mindestens im Bereich wischen 0 % und 60 % variiert wird.

11. Verfahren (1) nach Anspruch 10, **dadurch gekennzeichnet, dass** für jeweils ein Zweiphasenmedium ein Trainingsdatensatz erhoben wird und für jedes Zweiphasenmedium ein separates künstliches neuronales Netzwerk (18) trainiert wird.

12. Verfahren (1) nach einem der Ansprüche 1 bis 11, **dadurch gekennzeichnet, dass** während eines Messvorgangs, beispielsweise während eines Abfüllvorgangs, alle Durchflussmesswerte $q_{TP}$, $q_{SP}$ abgespeichert werden, dass nach dem abgeschlossenen Messvorgang aus den abgespeicherten Durchflussmesswerten oder anderen aufgezeichneten Daten das Einphasenmessintervall (4) und das Zweiphasenmessintervall (3) ermittelt werden und die Korrekturrechnung $f_{corr}$ dann durchgeführt wird.

13. Coriolis-Massedurchflussmessgerät (2) mit mindestens einem von einem Medium (5) durchströmbarem Messrohr (6), mindestens einem Schwingungserzeuger (7), mindestens zwei Schwingungsaufnehmern (8) und mindestens einer Ansteuerungs- und Auswerteeinheit (9),

wobei die Ansteuerungs- und Auswerteeinheit (9) so ausgestaltet ist, dass beim Vorliegen einer Zweiphasenströmung eines Zweiphasenmediums mit Gasphase in einem Zweiphasenmessintervall (3) und einem daran anschließenden Vorliegen einer Einphasenströmung eines Einphasenmediums ohne Gasphase in einem Einphasenmessintervall (4), der Startzeitpunkt $t_{start}$ des Zweiphasenmessintervalls (3) beim Einsetzen der Zweiphasenströmung bestimmt wird, wobei der Endzeitpunkt $t_{end}$ des Zweiphasenmessintervalls (3) zum Ende des Vorliegens der Zweiphasenströmung bestimmt wird, wobei im Zweiphasenmessintervall (3) Zweiphasen-Durchflussmesswerte $q_{TP, meas}$ der Zweiphasenströmung ermittelt werden und zumindest teilweise gespeichert werden (13), wobei im Einphasenmessintervall (4) wenigstens eine Zustandsgröße $x_{SP}$ des Einphasenmediums ermittelt wird (14), **dadurch gekennzeichnet, dass** aus den gespeicherten Zweiphasen-Durchflussmesswerten $q_{TP, meas}$ und aus der wenigstens einen im Einphasenmessintervall (4) ermittelten Zustandsgröße $x_{SP}$ des Einphasenmediums als zumindest mittelbare Eingangsgrößen einer Korrekturrechnung $f_{corr}$ nachträglich korrigierte Zweiphasen-Durchflussmesswerte $q_{TP, corr}$ ermittelt werden (15) und dass die korrigierten Zweiphasen-Durchflussmesswerte $q_{TP,corr}$ als Einzelwerte ausgegeben werden oder als Teil eines kumulierten Durchflussmesswertes $m_{tot}$ ausgegeben werden (16).

14. Coriolis-Massedurchflussmessgerät nach Anspruch 13, **dadurch gekennzeichnet, dass** die Ansteuerungs- und Auswerteeinheit (9) so ausgebildet ist, dass wenigstens einer der Verfahrensschritte gemäß dem Kennzeichnungsteil wenigstens eines Anspruchs der Ansprüche 2 bis 12 ausgeführt wird.

15. Coriolis-Massedurchflussmessgerät nach Anspruch 13 oder 14, **dadurch gekennzeichnet, dass** der Startzeitpunkt $t_{start}$ des Zweiphasenmessintervalls (3) beim Einsetzen der Zweiphasenströmung und/oder dass der Endzeitpunkt $t_{end}$ des Zweiphasenmessintervalls (3) zum Ende des Vorliegens der Zweiphasenströmung bestimmt wird durch Auswertung der Höhe des Anregungssignals des Schwingungserzeugers (7) und/oder durch Auswertung der Höhe des Sensorsignals (24) des Schwingungsaufnehmers (8), insbesondere der Startzeitpunkt $t_{start}$ des Zweiphasenmessintervalls (3) festgestellt wird bei Überschreiten einer Grenzhöhe des Anregungssignals und/oder des Sensorsignals (24), insbesondere der Endzeitpunkt $t_{end}$ des Zweiphasenmessintervalls (3) festgestellt wird bei Unterschreiten einer Grenzhöhe des Anregungssignals und/oder des Sensorsignals (24).

## Claims

1. Method (1) for determining flow measurement values of a Coriolis mass flowmeter (2) in the presence of a two-phase flow of a two-phase medium having a gas phase in a two-phase measurement interval (3) and a subsequent presence of a single-phase flow of a single-phase medium not having a gas phase in a single-phase measurement interval (4),

    wherein the start time $t_{start}$ of the two-phase measurement interval (3) is detected (11) at the onset of the two-phase flow,
    wherein the end time $t_{end}$ of the two-phase measurement interval (3) is detected (12) at the end of the presence of the two-phase flow,
    wherein, in the two-phase measurement interval (3), two-phase flow measurement values $q_{TP, meas}$ of the two-phase flow are determined and at least partially stored (13),
    wherein, in the single-phase measurement interval (4), at least one state variable $x_{SP}$ of the single-phase medium is determined (14),
    **characterized in that**, from the stored two-phase flow measurement values $q_{TP, meas}$ and from the at least one state variable $x_{SP}$ of the single-phase medium determined in the single-phase measurement interval (4), subsequently corrected two-phase flow measurement values $q_{TP, corr}$ are determined (15) as at least indirect input variables of a correction calculation $f_{corr}$, and
    **that** the corrected two-phase flow measurement values $q_{TP, corr}$ are output as individual values or are output as part of a cumulative flow measurement value $m_{tot}$ (16).

2. Method (1) according to claim 1, **characterized in that** at least the density $\rho_{SP}$ of the single-phase medium is determined as state variable of the single-phase medium and is used as at least an indirect input variable of the correction calculation $f_{corr}$.

3. Method (1) according to claim 2, **characterized in that** the gas-volume fraction GVF of the two-phase medium is calculated (17) using the density $\rho_{SP}$ of the single-phase medium, and the calculated gas-volume fraction GVF of the two-phase medium is used as a direct input variable of the correction calculation, wherein the gas volume fraction GVF of the two-phase medium is calculated in particular by forming the quotient of the difference between the density $\rho_{SP}$ of the single-phase medium and the density $\rho_{TP}$ of the two-phase medium and the density $\rho_{SP}$ of the single-phase medium, particularly preferably is calculated by forming the quotient from the difference between the density $\rho_{SP}$ of the single-phase medium and the density $\rho_{TP}$ of the two-phase medium and the difference between the density $\rho_{SP}$ of the single-phase medium and the density $\rho_G$ of the gas phase of the two-phase medium.

4. Method (1) according to claim 3, **characterized in that** the density $\rho_G$ of the gas phase of the two-phase medium is determined by measuring the temperature $T_{TP}$ of the two-phase medium and measuring the pressure p at the outflow side of the Coriolis mass flowmeter (2), and the density $\rho_G$ of the gas phase of the two-phase medium is determined based on the measured temperature $T_{TP}$ of the two-phase medium and based on the measured pressure p at the outflow side of the Coriolis mass flowmeter.

5. Method (1) according to any one of claims 1 to 4, **characterized in that** the viscosity $\mu_{SP}$ of the single-phase medium is used as a further input variable of the correction calculation $f_{corr}$, in particular wherein the viscosity $\mu_{SP}$ of the single-phase medium is determined from a temperature-dependent viscosity curve using the temperature $T_{TP}$ of the two-phase medium.

6. Method (1) according to any one of claims 1 to 5, **characterized in that** the differential pressure $P_D$ over the inflow side and the outflow side of the Coriolis mass flowmeter (2) is used as a further input variable of the correction calculation, in particular wherein the differential pressures $P_D$ determined in the two-phase measurement interval are at least partially stored, particularly preferably a differential pressure $P_D$ is also stored for each stored two-phase flow measurement value.

7. Method (1) according to any one of claims 1 to 6, **characterized in that** the correction calculation $f_{corr}$ is implemented with an approximate solution method in which the input variables of the correction calculation $f_{corr}$, i.e. at least the stored two-phase flow measurement values $q_{TP}$ and the at least one state variable $x_{SP}$ of the single-phase medium determined in the single-phase measurement interval (4) as at least indirect input variables, are approximately mapped onto the corrected two-phase flow measurement values $q_{TP,corr}$, in particular wherein the approximate solution method is implemented by an artificial neural network (18) or by a support vector machine.

8. Method (1) according to claim 7, **characterized in that** the correction calculation $f_{corr}$ is implemented by an artificial neural network (18) having an input layer with at least two input neurons (19) for supply of the stored two-phase flow measurement values $q_{TP}$ to be corrected and for supply of the state variable $x_{SP}$ of the single-phase medium determined in the single-phase measurement interval (4) or a variable derived therefrom as at least indirect input variables, having an output layer with an output neuron (20) for output of the subsequently corrected two-phase flow measurement values $q_{TP, corr}$, and having at least one intermediate layer with at least two neurons (21), wherein each input neuron (19) is connected to each neuron (21) of the intermediate layer via directed and weighted signal paths (22) and wherein each neuron (21) of the intermediate layer is connected to the output neuron (20) of the output layer via a directed and weighted signal path (23) and, in particular, each neuron (21) of the intermediate layer is supplied with an offset value $b_i$.

9. Method (1) according to claim 8, **characterized in that** the artificial neural network (18) comprises

at least four input neurons (19) in the input layer for supply of the stored two-phase flow measurement values to be corrected, the gas-volume fraction GVF of the two-phase medium, the viscosity $\mu_{SP}$ of the single-phase medium and the differential pressure $P_D$ via the inflow side and the outflow side of the Coriolis mass flowmeter (2),
an output neuron (20) for output of the subsequently corrected two-phase flow measurement values $q_{TP, corr}$, and
four neurons (21) in an intermediate layer, wherein each input neuron (19) is connected to each neuron (21) of the intermediate layer via directed and weighted signal paths (22) and wherein each neuron (21) of the intermediate layer is connected to the output neuron (20) of the output layer via a directed and weighted signal path (23) and, in particular, an offset value $b_i$ is applied to each neuron (21) of the intermediate layer.

10. Method (1) according to claim 8 or 9, **characterized in that** the artificial neural network (18) is trained with a training data set, wherein the training data set is collected for one design of a Coriolis mass flowmeter (2) and the training data set comprises value tuples from the used input variables of the artificial neural network (18) and the output variable of the artificial neural network (18), in particular wherein the flow is varied over at least 80% of the measurement range, in particular wherein the gas volume fraction GVF of the two-phase medium is varied at least in the range between 0% and 60%.

11. Method (1) according to claim 10, **characterized in that** a training data set is collected for each two-phase medium and a separate artificial neural network (18) is trained for each two-phase medium.

12. Method (1) according to any one of claims 1 to 11, **characterized in that** all flow measurement values $q_{TP}$, $q_{SP}$ are stored during a measurement operation, for example during filling, that, after the completed measurement operation, the single-phase measurement interval (4) and the two-phase measurement interval (3) are determined from the stored flow measurement values or other recorded data, and the correction calculation $f_{corr}$ is then carried out.

13. Coriolis mass flowmeter (2) having at least one measuring tube (6) through which a medium (5) can flow, at least one oscillation generator (7), at least two oscillation sensors (8) and at least one control and evaluation unit (9),

wherein the control and evaluation unit (9) is designed such that, in the presence of a two-phase flow of a two-phase medium having a gas phase in a two-phase measurement interval (3) and a subsequent presence of a single-phase flow of a single-phase medium not having a gas phase in a single-phase measurement interval (4), the starting time $t_{start}$ of the two-phase measurement interval (3) is detected at the onset of the two-phase flow,
wherein the end time $t_{end}$ of the two-phase measurement interval (3) is detected at the end of the presence of the two-phase flow,
wherein, in the two-phase measurement interval (3), two-phase flow measurement values $q_{TP, meas}$ of the two-phase flow are determined and at least partially stored (13),
wherein, in the single-phase measurement interval (4), at least one state variable $x_{SP}$ of the single-phase medium is determined (14),
**characterized in**
**that**, from the stored two-phase flow measurement values $q_{TP, meas}$ and from the at least one state variable $x_{SP}$ of the single-phase medium determined in the single-phase measurement interval (4), subsequently corrected two-phase flow measurement values $q_{TP, corr}$ are determined (15) as at least indirect input variables of a correction calculation $f_{corr}$, and
**that** the corrected two-phase flow measurement values $q_{TP, corr}$ are output as individual values or are output (16) as part of a cumulative flow measurement value $m_{tot}$.

14. Coriolis mass flowmeter according to claim 13, **characterized in that** the control and evaluation unit (9) is designed such that at least one of the method steps is carried out according to the characterizing portion of at least one claim of claims 2 to 12.

**15.** Coriolis mass flowmeter according to claim 13 or 14, **characterized in that** the start time $t_{start}$ of the two-phase measurement interval (3) is detected at the onset of the two-phase flow and/or that the end time $t_{end}$ of the two-phase measurement interval (3) is detected at the end of the presence of the two-phase flow by evaluating the level of the excitation signal of the oscillation generator (7) and/or by evaluating the level of the sensor signal (24) of the oscillation sensor (8), in particular the start time $t_{start}$ of the two-phase measurement interval (3) is detected when a limit height of the excitation signal and/or of the sensor signal (24) is exceeded, in particular the end time $t_{end}$ of the two-phase measurement interval (3) is detected when the excitation signal and/or the sensor signal (24) falls below a limit height.

**Revendications**

**1.** Procédé (1) de détermination de valeurs de mesure de débit d'un débitmètre massique à effet Coriolis (2) en présence d'un écoulement diphasique d'un milieu diphasique comportant une phase gazeuse dans un intervalle de mesure diphasique (3) et en présence ultérieurement d'un écoulement monophasique d'un milieu monophasique sans phase gazeuse dans un intervalle de mesure monophasique (4),

l'instant initial $t_{start}$ de l'intervalle de mesure diphasique (3) étant déterminé (11) au début de l'écoulement diphasique,
l'instant final $t_{end}$ de l'intervalle de mesure diphasique (3) étant déterminé (12) à la fin de la présence de l'écoulement diphasique,
des valeurs de mesure de débit diphasique $q_{TP,meas}$ de l'écoulement diphasique étant déterminées dans l'intervalle de mesure diphasique (3) et mémorisées au moins partiellement (13),
au moins une grandeur d'état $x_{SP}$ du milieu monophasique étant déterminée (14) dans l'intervalle de mesure monophasique (4),
**caractérisé en ce que**
des valeurs de mesure de débit diphasique corrigées ultérieurement $q_{TP,corr}$ sont déterminées (15) à partir des valeurs de mesure de débit diphasique mémorisées $q_{TP.meas}$ et de l'au moins une grandeur d'état $x_{SP}$ du milieu monophasique, déterminée dans l'intervalle de mesure monophasique (4), comme grandeurs d'entrée au moins indirectes d'un calcul de correction $f_{corr}$ et les valeurs de mesure de débit diphasique corrigées $q_{TP,corr}$ sont délivrées en sortie sous la forme de valeurs individuelles ou sont délivrées en sortie (16) comme partie d'une valeur de mesure de débit cumulée $m_{tot}$.

**2.** Procédé (1) selon la revendication 1, **caractérisé en ce qu'**au moins la densité $\rho_{SP}$ du milieu monophasique est déterminée comme grandeur d'état du milieu monophasique et est utilisée comme grandeur d'entrée au moins indirecte du calcul de correction $f_{corr}$.

**3.** Procédé (1) selon la revendication 2, **caractérisé en ce que** la fraction volumique de gaz GVF du milieu diphasique est calculée (17) à partir de la densité $\rho_{sp}$ du milieu monophasique et la fraction volumique de gaz GVF calculée du milieu diphasique est utilisée comme grandeur d'entrée directe du calcul de correction, la fraction volumique de gaz GVF du milieu diphasique étant calculée notamment par formation du quotient de la différence entre la densité $\rho_{SP}$ du milieu monophasique et la densité $\rho_{TP}$ du milieu diphasique et de la densité $\rho_{SP}$ du milieu monophasique, de manière particulièrement préférée par formation du quotient de la différence entre la densité $\rho_{SP}$ du milieu monophasique et la densité $\rho_{TP}$ du milieu diphasique et de la différence entre la densité $\rho_{SP}$ du milieu monophasique et la densité $\rho_G$ de la phase gazeuse du milieu diphasique.

**4.** Procédé (1) selon la revendication 3, **caractérisé en ce que** la densité $\rho_G$ de la phase gazeuse du milieu diphasique est déterminée par mesure de la température $T_{TP}$ du milieu diphasique et par mesure de la pression p en sortie du débitmètre massique à effet Coriolis (2) et la densité $\rho_G$ de la phase gazeuse du milieu diphasique est déterminée sur la base de la température mesurée $T_{TP}$ du milieu diphasique et sur la base de la pression mesurée p du côté sortie du débitmètre massique à effet Coriolis.

**5.** Procédé (1) selon l'une des revendications 1 à 4, **caractérisé en ce que** la viscosité $\mu_{SP}$ du milieu monophasique est utilisée comme grandeur d'entrée supplémentaire du calcul de correction $f_{corr}$, notamment la viscosité $\mu_{SP}$ du milieu monophasique est déterminée à partir d'une courbe de viscosité dépendant de la température à l'aide de la température $T_{TP}$ du milieu diphasique.

**6.** Procédé (1) selon l'une des revendications 1 à 5, **caractérisé en ce que** la pression différentielle $P_D$ entre le côté entrée et le côté sortie du débitmètre massique à effet Coriolis (2) est utilisée comme grandeur d'entrée supplémentaire du calcul de correction, en particulier les pressions différentielles $P_D$ déterminées dans l'intervalle de mesure diphasique étant au moins partiellement mémorisées, de manière particulièrement préférée une pression différentielle $P_D$ étant également mémorisée pour chaque valeur de mesure de débit diphasique mémorisée.

7. Procédé (1) selon l'une des revendications 1 à 6, **caractérisé en ce que** le calcul de correction $f_{corr}$ est mis en oeuvre avec un procédé de résolution approchée dans lequel les grandeurs d'entrée du calcul de correction $f_{corr}$, c'est-à-dire au moins les valeurs de mesure de débit diphasique mémorisées $q_{TP}$ et la grandeur d'état $x_{SP}$ du milieu monophasique, déterminée au moins dans l'intervalle de mesure monophasique (4), sont approximativement reliées par une application, comme grandeurs d'entrée au moins indirectes, aux valeurs de mesure de débit diphasique corrigées $q_{TP,corr}$, en particulier le procédé de résolution approchée étant mis en oeuvre par un réseau neuronal artificiel (18) ou par une machine à vecteur support.

8. Procédé (1) selon la revendication 7, **caractérisé en ce que** le calcul de correction $f_{corr}$ est mis en oeuvre par un réseau neuronal artificiel (18) qui comprend une couche d'entrée pourvue d'au moins deux neurones d'entrée (19) destinés à injecter les valeurs de mesure diphasique mémorisées $q_{TP}$ à corriger et injecter la grandeur d'état $x_{SP}$ du milieu monophasique, déterminée dans l'intervalle de mesure monophasique (4), ou une grandeur qui en dérive comme grandeurs d'entrée au moins indirectes, une couche de sortie comportant un neurone de sortie (20) destiné à délivrer en sortie les valeurs de mesure de débit diphasique corrigées ultérieurement $q_{TP,corr}$, et au moins une couche intermédiaire comportant au moins deux neurones (21), chaque neurone d'entrée (19) étant relié à chaque neurone (21) de la couche intermédiaire par le biais de chemins de signal orientés et pondérés (22) et chaque neurone (21) de la couche intermédiaire étant relié au neurone de sortie (20) de la couche de sortie par le biais d'un chemin de signal orienté et pondéré (23) et en particulier chaque neurone (21) de la couche intermédiaire étant soumis à une valeur de décalage $b_i$.

9. Procédé (1) selon la revendication 8, **caractérisé en ce que** le réseau neuronal artificiel (18) comporte au moins quatre neurones d'entrée (19) dans la couche d'entrée, destinés à injecter les valeurs de mesure de débit diphasique mémorisées à corriger, la fraction volumique de gaz GVF du milieu diphasique, la viscosité $\mu_{SP}$ du milieu monophasique et la pression différentielle $P_D$ du côté entrée et du côté sortie du débitmètre massique à effet Coriolis (2), un neurone de sortie (20) destiné à délivrer en sortie les valeurs de mesure de débit diphasique corrigées ultérieurement $q_{TP,corr}$ et quatre neurones (21) dans une couche intermédiaire, chaque neurone d'entrée (19) étant relié à chaque neurone (21) de la couche intermédiaire par le biais de chemins de signal orientés et pondérés (22) et chaque neurone (21) de la couche intermédiaire étant relié au neurone de sortie (20) de la couche de sortie par le biais d'un chemin de signal orienté et pondéré (23) et en particulier chaque neurone (21) de la couche intermédiaire étant soumis à une valeur de décalage $b_i$.

10. Procédé (1) selon la revendication 8 ou 9, **caractérisé en ce que** le réseau neuronal artificiel (18) est soumis à un apprentissage avec un ensemble de données d'apprentissage, l'ensemble de données d'apprentissage étant collecté pour un type de construction d'un débitmètre massique à effet Coriolis (2) et l'ensemble de données d'apprentissage comprenant des multiplets de valeurs provenant des grandeurs d'entrée utilisées du réseau neuronal artificiel (18) et de la grandeur de sortie du réseau neuronal artificiel (18), notamment le débit variant sur au moins 80 % de la plage de mesure, en particulier la fraction volumique de gaz GVF du milieu diphasique variant au moins dans la plage comprise entre 0 % et 60 %.

11. Procédé (1) selon la revendication 10, **caractérisé en ce qu'**un ensemble de données d'apprentissage est collecté pour chaque milieu diphasique et un réseau neuronal artificiel distinct (18) est soumis à un apprentissage pour chaque milieu diphasique.

12. Procédé (1) selon l'une des revendications 1 à 11, **caractérisé en ce que**, lors d'un processus de mesure, par exemple lors d'un processus de remplissage, toutes les valeurs de mesure de débit $q_{TP}$, $q_{SP}$ sont mémorisées, **en ce que**, une fois le processus de mesure terminé, l'intervalle de mesure monophasique et l'intervalle de mesure diphasique (3) sont déterminés à partir des valeurs de mesure de débit mémorisées ou d'autres données enregistrées (4) et le calcul de correction $f_{corr}$ est ensuite effectué.

13. Débitmètre massique à effet Coriolis (2) comprenant un tube de mesure (6) à travers lequel un milieu (5) peut s'écouler, au moins un générateur de vibrations (7), au moins deux capteurs de vibrations (8) et au moins une unité de commande et d'évaluation (9),

l'unité de commande et d'évaluation (9) étant conçue de telle sorte que, en présence d'écoulement diphasique d'un milieu diphasique comprenant une phase gazeuse dans un intervalle de mesure diphasique (3) et en présence ultérieurement d'un écoulement monophasique d'un milieu monophasique sans phase gazeuse dans un intervalle de mesure monophasique (4), l'instant initial $t_{start}$ de l'intervalle de mesure diphasique (3) soit déterminé au début de l'écoulement diphasique, l'instant final $t_{end}$ de l'intervalle de mesure diphasique (3) étant déterminé à la fin de la présence de l'écoulement diphasique,

des valeurs de mesure de débit diphasique $q_{TP,meas}$ de l'écoulement diphasique étant déterminées dans l'intervalle de mesure diphasique (3) et mémorisées au moins partiellement (13),

au moins une grandeur d'état $x_{SP}$ du milieu monophasique étant déterminée (14) dans l'intervalle de mesure monophasique (4),

**caractérisé en ce que**

des valeurs de mesure de débit diphasique corrigées ultérieurement $q_{TP,corr}$ sont déterminées (15) à partir des valeurs de mesure de débit diphasique mémorisées $q_{TP.meas}$ et de l'au moins une grandeur d'état $x_{SP}$ du milieu monophasique, déterminée dans l'intervalle de mesure monophasique (4), comme grandeurs d'entrée au moins indirectes d'un calcul de correction $f_{corr}$ et les valeurs de mesure de débit diphasique corrigées $q_{TP,corr}$ sont délivrées en sortie sous la forme de valeurs individuelles ou sont délivrées en sortie (16) comme partie d'une valeur de mesure de débit cumulée $m_{tot}$.

14. Débitmètre massique à effet Coriolis selon la revendication 13, **caractérisé en ce que** l'unité de commande et d'évaluation (9) est conçue de telle sorte qu'au moins une des étapes de procédé soit exécutée selon la partie caractérisante d'au moins une revendication des revendications 2 à 12.

15. Débitmètre massique à effet Coriolis selon la revendication 13 ou 14, **caractérisé en ce que** l'instant initial $t_{start}$ de l'intervalle de mesure diphasique (3) est déterminé au début de l'écoulement diphasique et/ou en ce que l'instant final $t_{end}$ de l'intervalle de mesure diphasique (3) est déterminé à la fin de la présence de l'écoulement diphasique par évaluation de la hauteur du signal d'excitation du générateur de vibrations (7) et/ou par évaluation de la hauteur du signal de capteur (24) du capteur de vibrations (8), en particulier l'instant initial $t_{start}$ de l'intervalle de mesure diphasique (3) étant déterminé lorsqu'une hauteur limite du signal d'excitation et/ou du signal de capteur (24) est franchie vers le haut, en particulier l'instant final $t_{end}$ de l'intervalle de mesure diphasique (3) étant déterminé lorsqu'une hauteur limite du signal d'excitation et/ou du signal de capteur (24) est franchie vers le bas.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018123534 A1
- US 8831896 B2
- US 10473512 B2
- DE 102006017676 A1

**In der Beschreibung aufgeführte Nicht-Patentliteratur**

- **B. WANG, L. et al.** Gas-Liquid Two-Phase Flow Measurement Using Coriolis Flowmeters Incorporating Artificial Neural Network, Support Vektor Machine, and Genetic Programming Algorithms. *IEEE Transactions On Instrumentation And Measurement,* Mai 2017, vol. 66 (5